# FASCICULE DE BREVET EUROPEEN

(11) **EP 3 703 972 B1**
(45) Date de publication et mention de la délivrance du brevet: **24.05.2023**
(21) Numéro de dépôt: 18795607.3
(22) Date de dépôt: 30.10.2018
(51) Int. Cl.: B60N 2/02, B60N 2/90, B60R 16/037

(54) **SYSTEME ET PROCEDE DE REGLAGE D'UN SIEGE DE CONDUCTEUR D'UN VEHICULE AUTOMOBILE**
SYSTEM UND VERFAHREN ZUR EINSTELLUNG EINES FAHRERSITZES EINES KRAFTFAHRZEUGS
SYSTEM AND METHOD FOR ADJUSTING A DRIVER'S SEAT OF A MOTOR VEHICLE

(30) Priorité: 31.10.2017 FR 1760279
(43) Date de publication de la demande: 09.09.2020
(73) Titulaire: Renault s.a.s, 92100 Boulogne Billancourt (FR)
(72) Inventeur: LESBATS, Fabrice, 94370 Sucy En Bre (FR)
(74) Mandataire: Renault Group
(86) Numéro de dépôt international: PCT/EP2018/079708
(87) Numéro de publication internationale: WO 2019/086453

(56) Documents cités:
- EP-A1- 3 000 651
- EP-A1- 3 000 683
- EP-A1- 3 025 921
- EP-A1- 3 124 319
- EP-A1- 3 124 348
- EP-A1- 3 153 346
- EP-A2- 2 840 000
- WO-A1-2006/120542
- WO-A1-2017/054897
- DE-C1- 4 226 747

## Description

La présente invention concerne la gestion de la position de conduite d'un véhicule automobile. Elle concerne en particulier l'adaptation de la position du conducteur à divers modes de conduite, lorsque le véhicule est en marche.

Les sièges des véhicules, et plus particulièrement le siège du poste de conduite, sont en effet réglables selon plusieurs degrés de liberté. C'est ainsi qu'il est possible de régler la position longitudinale du siège, son inclinaison, sa hauteur, de régler l'inclinaison du dossier, de l'assise, ...

Les divers réglages de la position du siège sont facilités lorsque les réglages s'effectuent électriquement.

Il a par ailleurs été proposé de régler la position de conduite en fonction de divers paramètres.

Le document DE 10 201 300 48 11 propose à cet égard de régler automatiquement certains accessoires de conduite tels que le rétroviseur, le volant et le siège en fonction de la morphologie du conducteur.

En outre, les documents DE 10 201 322 65 58 ou US 9 440 603 proposent un réglage automatique du siège conducteur en fonction de modes de conduite sélectionnés.

Le document EP-A-3000651 décrit un système et un procédé permettant la rétraction du siège dans un véhicule en mode conduite autonome.

Généralement, un tel réglage automatique de la position d'un siège conducteur n'est possible qu'à l'arrêt, pour des raisons de sécurité, afin d'éviter la perte de contact avec la pédale de frein.

Cependant, lorsque le conducteur souhaite modifier le mode de conduite du véhicule, lors du roulage, il reste souhaitable de pouvoir modifier la position de conduite. Il reste en particulier souhaitable de pouvoir modifier le réglage du siège conducteur lorsque le véhicule roule, de manière automatique voire manuelle, en fonction d'un mode de conduite sélectionné, tout en garantissant la sécurité en s'assurant que le conducteur reste maitre de son véhicule.

L'invention porte donc sur le système de réglage d'un siège conducteur de véhicule automobile, en particulier un système de réglage de la position de conduite d'un siège conducteur de véhicule automobile, comprenant un calculateur, un ensemble d'actionneurs du siège commandés par le calculateur et une interface homme-machine reliée au calculateur pour commander le réglage du siège.

Il comporte des moyens pour limiter le déplacement du siège dans une plage de valeurs de déplacement admissibles, lorsque le véhicule est en marche.

Ce dispositif permet ainsi de limiter le déplacement du siège afin d'éviter toute perte de contact avec la pédale de frein du véhicule. Il concerne aussi en détails un système de réglage d'un siège conducteur de véhicule automobile, en particulier un système de réglage de la position de conduite d'un siège conducteur de véhicule automobile muni de pédales, comprenant un calculateur, un ensemble d'actionneurs du siège commandés par le calculateur et une interface homme-machine reliée au calculateur pour commander le réglage du siège, caractérisé en ce qu'il comporte des moyens pour limiter le déplacement du siège dans une plage de valeurs de déplacement admissibles, lorsque le véhicule est en marche, garantissant que le pied du conducteur reste en contact avec les pédales.

Dans un mode de réalisation, le calculateur est relié à un système de gestion de modes de conduite et à l'interface homme-machine, et comprend des moyens pour commander la position du siège en fonction d'un mode de conduite sélectionné et en fonction d'ordres de commande saisis à partir de l'interface.

L'invention a également pour objet un procédé de réglage d'un siège conducteur de véhicule automobile, en particulier un procédé de réglage de la position de conduite d'un siège conducteur de véhicule automobile, dans lequel on commande le déplacement du siège en fonction d'ordres de commande saisis à partir d'une interface hommemachin, on règle le siège lorsque le véhicule est en marche et on limite le déplacement du siège dans une plage de valeurs de déplacement admissibles, lorsque le véhicule est en marche.

Dans un mode de mise en oeuvre, on commande la position du siège en fonction d'un mode de conduite sélectionné et en fonction d'ordres de commande saisis à partir de l'interface.

Par exemple, on détermine une plage autorisée de déplacement autour d'une position de référence.

Ce procédé peut en outre comporter une étape d'avertissement du conducteur lorsque le calculateur détecte une position du siège conducteur hors de la plage autorisée de déplacement.

L'invention concerne aussi un véhicule automobile comprenant un système de réglage d'un siège selon les caractéristiques précédentes.

D'autres buts, avantages et caractéristiques de l'invention apparaîtront à la lecture de la description suivante, donnée à titre d'exemple non limitatif et faite en référence aux dessins annexés sur lesquels :
- La figure 1 est un schéma représentatif des éléments constitutifs d'un système de réglage d'un siège conducteur selon l'invention,
- La figure 2 est un schéma montrant la position du pied d'un conducteur dans une position de réglage de siège par rapport à une position limite autorisée, et
- La figure 3 est un ordinogramme illustrant les principales étapes d'un procédé mis en oeuvre par le dispositif selon l'invention.

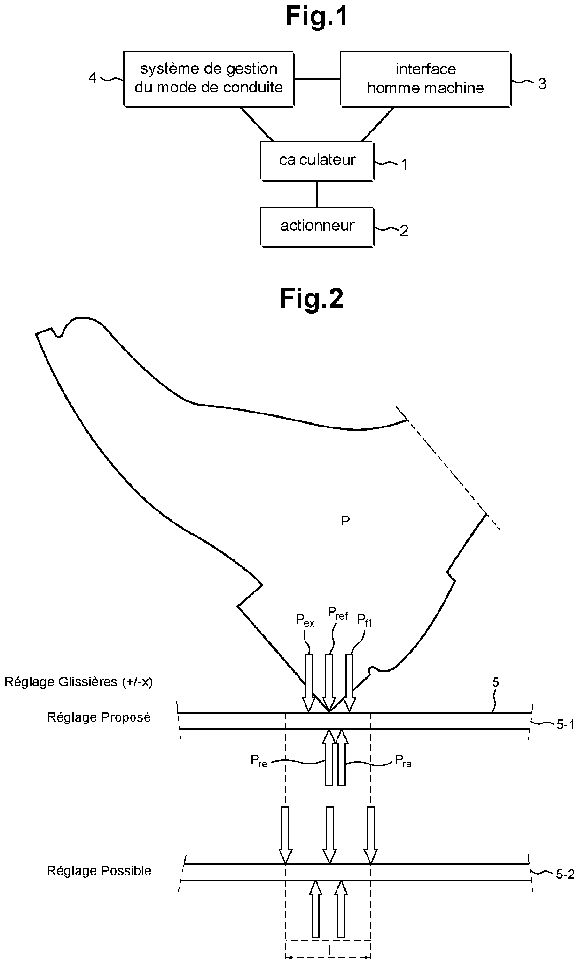

On a représenté sur la figure 1 les éléments constitutifs d'un système de réglage de la position d'un siège conducteur de véhicule automobile. Ce système est destiné à permettre le réglage de la position du siège conducteur d'un véhicule automobile à réglage automatique voire manuel. En détail, le système permet le réglage de la position de conduite du siège conducteur, pour un véhicule dans lequel le conducteur est toujours, et de façon continue, en position de conduite lorsque le véhicule est en marche. Le système ne concerne pas les véhicules autonomes. Le système ne concerne pas les véhicules dans lesquels le conducteur pourrait être déconnecté d'une position de conduite en cours de roulage.

Dans le mode de réalisation envisagé, le véhicule automobile est doté d'un système de gestion de modes de conduite permettant à un conducteur de régler les paramètres du véhicule selon un mode de conduite choisi.

Il peut, par exemple, s'agir de régler un ou plusieurs des paramètres suivants : la réponse du moteur, les lois de passage de rapport de la boîte de vitesses, les paramètres du châssis à quatre roues directrices, les paramètres de réglage de l'amortissement piloté, l'effort de manoeuvre du volant et la réactivité de la pédale d'accélérateur.

Ainsi, par exemple, le véhicule est doté d'une interface proposant au conducteur un menu de sélection pour sélectionner un mode de conduite et agir sur ces paramètres selon le mode sélectionné.

Le véhicule est par ailleurs doté de sièges réglables, à réglage électrique, et comprend des mécanismes de réglage de type articulations, glissières électriques, par exemple à vis sans fin, mécanisme de rehausse avec motoréducteur, pilotables sous l'action de boutons de commande dédiés.

Avantageusement, le siège conducteur est automatiquement réglé dans des positions prédéterminées en fonction des modes de conduite sélectionnés. Le conducteur conserve toutefois la possibilité de procéder au réglage de la position de conduite en manoeuvrant les boutons de commande.

La sélection du mode de conduite pouvant se faire lors du roulage, le réglage de la position de conduite s'effectue également, de préférence, lors du roulage.

Les mécanismes de réglage sont donc des mécanismes de réglage dits à action continue, qui assurent un verrouillage de la position du siège même durant les réglages en restant en prise avec les éléments réglés, afin d'éviter tout risque de déverrouillage en phase de réglage.

Tel que représenté, le système de réglage selon l'invention comprend un calculateur 1 qui peut être intégré dans le siège du conducteur, un ensemble 2 d'actionneurs agissant sur l'assise et le dossier du siège conducteur et une interface homme-machine 3 manipulable par le conducteur pour agir sur un système de gestion de modes de conduite 4, notamment pour sélectionner un mode de conduite désiré. L'interface homme-machine 3 comprend par exemple un écran capacitif mesurant verticalement par exemple 8,7 pouces, ou 7 pouces et est disposé en position centrale et haute de la planche de bord. Bien entendu, les dimensions et l'implantation de l'interface ne sont nullement limitatives.

L'interface peut également comprendre une commande à reconnaissance vocale, et peut comprendre un affichage tête haute pour mettre à disposition du conducteur, dans son champ visuel, des informations de vitesse, de navigation, ou d'alerte sans quitter la route des yeux.

Concernant le siège conducteur, l'interface homme-machine comprend une commande électrique (non représentée), agissant directement sur le calculateur du siège conducteur, pour transmettre une ou plusieurs consignes de réglage aux actionneurs du siège. Des boutons de réglages complémentaires accessibles peuvent également être prévus pour modifier une consigne de réglage sélectionnée.

Le système de gestion de modes de conduite, quant à lui, coordonne les paramètres du véhicule avec un mode de conduite choisi. Comme indiqué précédemment, il agit notamment sur les paramètres du moteur, de la boîte de vitesses, du châssis, sur la colonne de direction, les pédales, ... Il agit également, par exemple, sur des paramètres d'ambiance tels que la tonalité de l'éclairage, les informations affichées, les couleurs de l'affichage tête haute, la sonorité du moteur, le mode de fonctionnement de la climatisation etc...

Ce système de gestion de modes de conduite 4 permet, par exemple, la sélection de cinq modes de conduite « neutre », « Confort », « Sport », « Eco », et « Personnalisé », chacun étant en outre associé à une position du siège conducteur.

Sur la figure 2, on a représenté le pied droit P d'un conducteur reposant sur le plancher 5 d'un véhicule automobile. Cette figure, la référence 5-1 désigne la position du plancher sur lequel sont reportées schématiquement les positions de réglage qui peuvent être proposées à partir de la position Pref lorsque le siège est déplacé dans le sens longitudinal, pour diverses modes de conduite, et la référence 5-2 désigne les valeurs limite de ces positions.

La position Pref est assimilée pour plus de clarté à la position du siège du conducteur, en admettant que le pied du conducteur se déplace de la même manière que le siège. Cette position Pref correspond à une position de réglage étalonnée. Elle peut, par exemple, correspondre à un mode de conduite préféré, par défaut. L'étalonnage est réalisable lorsque le conducteur sélectionne un mode de conduite « control » du véhicule.

Les quatre autres modes de conduite, et les positions de réglage du siège conducteur, sont par la suite sélectionnables :
- le mode « Confort » est associé à la position relative du pied Pex par rapport au plancher,
- le mode « Sport » est associé à la position Pf1,
- le mode « Eco »est associé à la position Pre, et
- le mode « Personnalisé » est associé à la position Pra.

Comme on le conçoit, lorsque la position du siège est modifiée, par exemple lorsque le siège est déplacé dans la direction longitudinale, la position du pied par rapport au plancher du véhicule est modifiée.

Par ailleurs, indépendamment du réglage du siège lié à un mode de conduite sélectionné, le conducteur peut également interagir avec l'interface homme-machine, ou avec les boutons de commande, pour modifier les positions Pex, Pf1, Pre et Pra associées aux modes de conduite « Confort », « Sport », « Eco », et « Personnalisé ». Le conducteur peut en particulier déplacer ces positions dans un intervalle sécuritaire, ou plage autorisée de déplacement I, s'étendant, par exemple, sur 2,5 cm vers l'avant et vers l'arrière à partir de la position d'étalonnage. Cette limite est active à vitesse non nulle. Elle permet de déplacer le siège vers une position cible, plus ergonomique pour le mode de conduite sélectionné, tout en garantissant que le pied droit P du conducteur reste en contact avec la pédale d'accélération.

Le conducteur peut également agir manuellement sur les boutons de commande des actionneurs du siège.

A partir de la position sélectionnée à partir de l'interface, voire à partir des boutons de réglage des actionneurs, le calculateur détermine la nouvelle position du siège et modifie en conséquence la position associée au mode de conduite activé.

Le calculateur est par ailleurs dûment programmé pour comparer l'écart de position entre la nouvelle position et l'ancienne position avec une valeur de seuil pour empêcher le déplacement du siège si cet écart dépasse la valeur de seuil. Il s'agit ainsi de s'assurer que le siège se déplace dans un intervalle sécuritaire, garantissant que le pied du conducteur reste en contact avec les pédales. Le calculateur comporte ainsi, stocké en mémoire, une plage de valeurs de déplacement admissibles constituées par un ensemble de valeurs limites de réglage du siège, pour chaque paramètre de réglage possible et pour chaque mode de conduite et compare une valeur de réglage souhaitée avec une valeur limite correspondante.

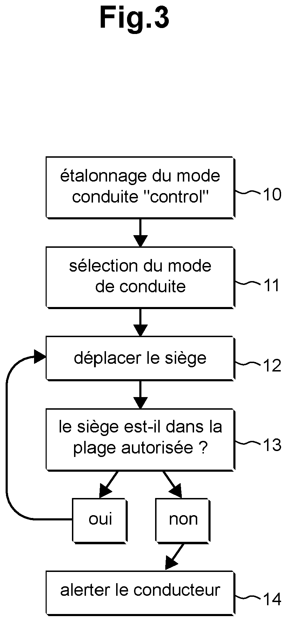

En se référant également à la figure 3, pour procéder au réglage d'un siège conducteur selon un mode de conduite, à partir du mode de conduite « neutre » (étape 10), le calculateur surveille si un autre mode de conduite est sélectionné (étape 11) et, dans ce cas, initie une phase de déplacement du siège conducteur (étape 12).

Le déplacement est effectué au moyen des actionneurs prévus à cet effet dans le siège. Ces actionneurs peuvent recevoir une consigne d'activation ou d'arrêt depuis le calculateur intégré dans le siège, lequel reçoit ses instructions depuis le système de gestion du mode de conduite, ou de l'interface homme-machine.

Le calculateur compare ensuite, au cours d'une étape de contrôle de position 13, la consigne qu'il a reçue avec la position du siège actuelle calculée depuis ses positions précédentes. Si la nouvelle position sort d'une plage autorisée de déplacement I, alors un signal est transmis depuis le calculateur jusqu'à l'interface homme-machine pour alerter le conducteur (étape 14). Cette alerte est inhibée si le véhicule est à l'arrêt. Simultanément, le déplacement du siège est interdit.

Par exemple, en référence à la figure 2, dans le cas d'une commande de déplacement horizontal du siège, par réglage de sa glissière, d'avant en arrière, lorsque le conducteur sélectionne un mode de conduite « confort » (position Pex) et demande une modification de la position du siège, le calculateur vérifie si la position Pex demandée par le conducteur dépasse la valeur limite autorisée et interdit, si tel est le cas, le déplacement du siège.

## Revendications

1. Système de réglage d'un siège conducteur de véhicule automobile, en particulier système de réglage de la position de conduite d'un siège conducteur de véhicule automobile, comprenant un calculateur (1), un ensemble d'actionneurs (2) du siège commandés par le calculateur et une interface homme-machine (3) reliée au calculateur (1) pour commander le réglage du siège, **caractérisé en ce qu'**il comporte des moyens pour limiter le déplacement du siège dans une plage (I) de valeurs de déplacement admissibles, lorsque le véhicule est en marche.

2. Système de réglage d'un siège conducteur de véhicule automobile selon la revendication précédente, en particulier système de réglage de la position de conduite d'un siège conducteur de véhicule automobile muni de pédales, **caractérisé en ce qu'**il comporte des moyens pour limiter le déplacement du siège dans une plage (I) de valeurs de déplacement admissibles s'étendant vers l'avant et vers l'arrière à partir d'une position d'étalonnage, correspondante à une position de réglage étalonné (Pref), lorsque le véhicule est en marche, afin de garantir que le pied du conducteur reste en contact avec les pédales.

3. Système de réglage d'un siège conducteur de véhicule automobile selon la revendication précédente **caractérisé en ce que** la plage autorisée de déplacement admissible (I) s'étend sur 2,5 cm vers l'avant et vers l'arrière à partir de la position d'étalonnage (Pref).

4. Système de réglage selon l'une des revendications précédentes, dans lequel le calculateur (1) est relié à un système de gestion de modes de conduite (4) et à l'interface homme-machine (3), et comprend des moyens pour commander la position du siège en fonction d'un mode de conduite sélectionné et en fonction d'ordres de commande saisi à partir de l'interface (3).

5. Procédé de réglage d'un siège conducteur de véhicule automobile, en particulier procédé de réglage de la position de conduite d'un siège conducteur de véhicule automobile, dans lequel on commande le déplacement du siège en fonction d'ordres de commande saisis à partir d'une interface homme-machine (3), **caractérisé en ce qu'**on règle le siège lorsque le véhicule est en marche et on limite le déplacement du siège dans une plage (I) de valeurs de déplacement admissibles, lorsque le véhicule est en marche.

6. Procédé de réglage d'un siège conducteur de véhicule automobile selon la revendication précédente, en particulier procédé de réglage de la position de conduite d'un siège conducteur de véhicule automobile muni de pédales, **caractérisé en ce qu'**on règle le siège lorsque le véhicule est en marche et on limite le déplacement du siège dans une plage (I) de valeurs de déplacement admissibles s'étendant vers l'avant et vers l'arrière à partir d'une position d'étalonnage, correspondante à une position de réglage étalonné (Pref), lorsque le véhicule est en marche, afin de garantir que le pied du conducteur reste en contact avec les pédales

7. Procédé de réglage selon l'une des revendications 5 ou 6, dans lequel on commande la position du siège en fonction d'un mode de conduite sélectionné et en fonction d'ordres de commande saisis à partir de l'interface (3).

8. Procédé de réglage selon l'une quelconque des revendications 5 à 7, dans lequel on détermine une plage autorisée de déplacements autour d'une position de référence.

9. Procédé de réglage selon l'une quelconque des revendications 5 à 8, comprenant en outre une étape d'avertissement du conducteur lorsque le calculateur détecte une position du siège conducteur hors de la plage autorisée de déplacement (3).

10. Véhicule automobile comprenant un système de réglage d'un siège conducteur selon l'une quelconque des revendications 1 à 4.

## Patentansprüche

1. System zur Einstellung eines Fahrersitzes eines Kraftfahrzeugs, insbesondere System zur Einstellung der Fahrposition eines Fahrersitzes eines Kraftfahrzeugs, umfassend einen Rechner (1), eine Gruppe von Sitzaktuatoren (2), die durch den Rechner gesteuert werden, und eine Mensch-Maschine-Schnittstelle (3), die mit dem Rechner (1) verbunden ist, um die Einstellung des Sitzes zu steuern, **dadurch gekennzeichnet, dass** es Mittel umfasst, um die Verschiebung des Sitzes in einem Bereich (I) zulässiger Verschiebungswerte zu begrenzen, wenn das Fahrzeug in Bewegung ist.

2. System zur Einstellung eines Fahrersitzes eines Kraftfahrzeugs nach dem vorangehenden Anspruch, insbesondere System zur Einstellung der Fahrposition eines Fahrersitzes eines mit Pedalen ausgestatteten Kraftfahrzeugs, **dadurch gekennzeichnet, dass** es Mittel umfasst, um die Verschiebung des Sitzes in einem Bereich (I) zulässiger Verschiebungswerte zu begrenzen, der sich von einer Kalibrierungsposition, die einer kalibrierten Einstellposition (Pref) entspricht, nach vorn und nach hinten erstreckt, wenn das Fahrzeug in Bewegung ist, um sicherzustellen, dass der Fuß des Fahrers in Kontakt mit den Pedalen bleibt.

3. System zur Einstellung eines Fahrersitzes eines Kraftfahrzeugs nach dem vorangehenden Anspruch, **dadurch gekennzeichnet, dass** sich der zulässige Bereich der zulässigen Verschiebung (I) von der Kalibrierungsposition (Pref) 2,5 cm nach vorn und nach hinten erstreckt.

4. Einstellsystem nach einem der vorangehenden Ansprüche, wobei der Rechner (1) mit einem Fahrmodusmanagementsystem (4) und mit der Mensch-Maschine-Schnittstelle (3) verbunden ist und Mittel zum Steuern der Sitzposition in Abhängigkeit von einem ausgewählten Fahrmodus und in Abhängigkeit von über die Schnittstelle (3) eingegebenen Steuerbefehlen umfasst.

5. Verfahren zur Einstellung eines Fahrersitzes eines Kraftfahrzeugs, insbesondere Verfahren zur Einstellung der Fahrposition eines Fahrersitzes eines Kraftfahrzeugs, bei dem die Verschiebung des Sitzes in Abhängigkeit von über eine Mensch-Maschine-Schnittstelle (3) eingegebenen Steuerbefehlen gesteuert wird, **dadurch gekennzeichnet, dass** der Sitz eingestellt wird, wenn das Fahrzeug in Bewegung ist, und die Verschiebung des Sitzes in einem Bereich (I) zulässiger Verschiebungswerte begrenzt ist, wenn das Fahrzeug in Bewegung ist.

6. Verfahren zur Einstellung eines Fahrersitzes eines Kraftfahrzeugs nach dem vorangehenden Anspruch, insbesondere Verfahren zur Einstellung der Fahrposition eines Fahrersitzes eines mit Pedalen ausgestatteten Kraftfahrzeugs, **dadurch gekennzeichnet, dass** der Sitz eingestellt wird, wenn das Fahrzeug in Bewegung ist, und die Verschiebung des Sitzes in einem Bereich (I) voreingestellter Verschiebungswerte begrenzt ist, der sich von einer Kalibrierungsposition, die einer kalibrierten Einstellposition (Pref) entspricht, nach vorn und nach hinten erstreckt, wenn das Fahrzeug in Bewegung ist, um sicherzustellen, dass der Fuß des Fahrers in Kontakt mit den Pedalen bleibt.

7. Einstellverfahren nach einem der Ansprüche 5 oder 6, wobei die Position des Sitzes in Abhängigkeit von einem ausgewählten Fahrmodus und in Abhängigkeit von über die Schnittstelle (3) eingegebenen Steuerbefehlen gesteuert wird.

8. Einstellverfahren nach einem der Ansprüche 5 bis 7, wobei ein zulässiger Verschiebungsbereich um eine Referenzposition bestimmt wird.

9. Einstellverfahren nach einem der Ansprüche 5 bis 8, ferner umfassend einen Schritt des Warnens des Fahrers, wenn der Rechner eine Position des Fahrersitzes außerhalb des zulässigen Verschiebungsbereichs (3) detektiert.

10. Kraftfahrzeug, umfassend ein System zur Einstellung eines Fahrersitzes nach einem der Ansprüche 1 bis 4.

## Claims

1. System for adjusting a driver's seat of a motor vehicle, in particular a system for adjusting the driving position of a driver's seat of a motor vehicle, comprising a computer (1), a set of actuators (2) of the seat that are controlled by the computer, and a human-machine interface (3) connected to the computer (1) for controlling the adjustment of the seat, **characterized in that** the system comprises means for limiting the movement of the seat to within a range (I) of permissible movement values when the vehicle is moving.

2. System for adjusting a driver's seat of a motor vehicle according to the preceding claim, in particular a system for adjusting the driving position of a driver's seat of a motor vehicle equipped with pedals, **characterized in that** the system comprises means for limiting the movement of the seat to within a range (I) of permissible movement values that extends forwards and backwards from a calibration position, which corresponds to a calibrated adjustment position (Pref), when the vehicle is moving, in order to ensure that the driver's foot remains in contact with the pedals.

3. System for adjusting a driver's seat of a motor vehicle according to the preceding claim, **characterized in that** the authorized permissible movement range (I) extends over 2.5 cm forwards and backwards from the calibration position (Pref).

4. Adjustment system according to one of the preceding claims, in which the computer (1) is connected to a system for managing driving modes (4) and to the human-machine interface (3), and comprises means for controlling the position of the seat on the basis of a selected driving mode and on the basis of control orders input from the interface (3).

5. Method for adjusting a driver's seat of a motor vehicle, in particular a method for adjusting the driving position of a driver's seat of a motor vehicle, in which the movement of the seat is controlled on the basis of control orders input from a human-machine interface (3), **characterized in that** the seat is adjusted when the vehicle is moving and the movement of the seat is limited to within a range (I) of permissible movement values when the vehicle is moving.

6. Method for adjusting a driver's seat of a motor vehicle according to the preceding claim, in particular a method for adjusting the driving position of a driver's seat of a motor vehicle equipped with pedals, **characterized in that** the seat is adjusted when the vehicle is moving and the movement of the seat is limited to within a range (I) of permissible movement values that extends forwards and backwards from a calibration position, which corresponds to a calibrated adjustment position (Pref), when the vehicle is moving, in order to ensure that the driver's foot remains in contact with the pedals.

7. Adjustment method according to either of Claims 5 and 6, in which the position of the seat is controlled on the basis of a selected driving mode and on the basis of control orders input from the interface (3).

8. Adjustment method according to any one of Claims 5 to 7, in which an authorized movement range is determined around a reference position.

9. Adjustment method according to any one of Claims 5 to 8, further comprising a step of warning the driver when the computer detects a position of the driver's seat that lies outside the authorized movement range (3).

10. Motor vehicle comprising a system for adjusting a driver's seat according to any one of Claims 1 to 4.
